# EUROPEAN PATENT APPLICATION

(11) **EP 4 417 460 A1**
(43) Date of publication of application: **21.08.2024**
(21) Application number: 23211846.3
(22) Date of filing: 23.11.2023
(51) Int. Cl.: B60L 53/14, B60L 58/27

(54) **ELECTRIC WORK VEHICLE**

(30) Priority: 15.02.2023 JP 2023021786
(71) Applicant: Kubota Corporation, Osaka-shi, Osaka 556-8601 (JP)
(72) Inventor: ITO, Hirokazu, Sakai-shi, Osaka, 5900908 (JP); ODAGIRI, Makoto, Sakai-shi, Osaka, 5900908 (JP)
(74) Representative: Cabinet Beau de Loménie

(57) **Abstract**

An electric work vehicle configured to travel and perform work with use of driving force output from a motive power source (41, 42, 43) includes: a battery (6) configured to supply electric power to the motive power source (41, 42, 43); a charger (50) configured to charge the battery (6) with electric power supplied from an external power source; and a control unit (52) configured to control processing for supplying electric power to the battery (6) performed by the charger (50), wherein the control unit (52) is configured to switch between a warm-up mode of charging the battery (6) and causing the battery (6) to perform a warm-up operation and a charging mode of charging the battery (6) without causing the battery (6) to perform the warm-up operation.

## Description

### BACKGROUND OF THE INVENTION

### 1. Field of the Invention

The present invention relates to an electric work vehicle that includes a battery chargeable with use of an external power source.

### 2. Description of the Related Art

Patent Document 1 (JP 2020-022296A) describes an electric work vehicle in which a battery is mounted. This type of electric work vehicle operates wheel driving motors and the like with electric power supplied from the mounted battery.

The battery mounted in the electric work vehicle is charged with use of a charger, such as a charger described in Patent Document 2 (JP 2022-108048A).

### SUMMARY OF THE INVENTION

However, in cold climates, for example, the temperature of the battery drops after charging has been completed, which results in a drop in the output voltage and a reduction in the power supply efficiency of the battery. As a result, conventional electric work vehicles have the disadvantage that the operating time may be shortened.

In view of the foregoing problem, the present invention aims to provide an electric work vehicle capable of avoiding a drop in the temperature of the battery after charging is complete and preventing a reduction in the operating time while battery power is being used.

An electric work vehicle of the present invention is an electric work vehicle configured to travel and perform work with use of driving force output from a motive power source, the electric work vehicle including: a battery configured to supply electric power to the motive power source; a charger configured to charge the battery with electric power supplied from an external power source; and a control unit configured to control processing for supplying electric power to the battery performed by the charger, wherein the control unit is configured to switch between a warm-up mode of charging the battery and causing the battery to perform a warm-up operation and a charging mode of charging the battery without causing the battery to perform the warm-up operation.

According to this invention, use of the warm-up mode can prevent the temperature of the battery from dropping after charging is complete, even in cold climates, for example. Further, since the warm-up operation is performed during charging, the warm-up operation can be performed with electric power supplied from the external power source for use in charging, and the warm-up operation can be performed without using battery power. As a result, it is possible to prevent a decrease in the operating time while battery power is being used.

In the present invention, it is preferable that the electric work vehicle further includes a manual operation tool configured to enable a mode switching operation to be manually performed on the control unit.

According to this configuration, it is possible to select either the charging mode or the warm-up mode while giving consideration to, for example, the outside temperature, how the electric vehicle is to be used after completion of charging, and the like.

In the present invention, it is preferable that the control unit includes a wireless communication unit configured to perform wireless communication with a communication terminal, and the control unit is controlled in accordance with operation information from the communication terminal.

According to this configuration, it is possible to switch to the warm-up mode even from a location away from the electric vehicle and the charger. Specifically, work involving mode switching can be avoided at locations where the outside temperature is low and the weather is bad.

In the present invention, it is preferable that the communication terminal includes a display unit configured to display a status of control performed by the control unit.

According to this configuration, it is possible to check the status of control performed by the control unit, i.e. information regarding, for example, whether the current mode is the warm-up operation mode or the charging mode, even from a location away from the electric vehicle and the charger.

In the present invention, it is preferable that the control unit includes a timer unit configured to turn on and off the warm-up operation in response to a predetermined time having elapsed.

According to this configuration, a setting can be configured such that the warm-up operation automatically turns on and off in response to a predetermined time having elapsed, thereby making it possible to avoid unwanted instances of the warm-up operation continuing for a long period of time, or the like.

In the present invention, it is preferable that the motive power source is an electric motor.

According to this configuration, heat emitted from the electric motor can be used to warm the area near the electric motor by causing a warm-up current to flow through the electric motor while the warm-up operation is being performed.

In the present invention, it is preferable that the motive power source is a hydraulic device.

According to this configuration, heat emitted from the hydraulic system can be used to warm the area near the hydraulic system by causing a warm-up current to flow through the hydraulic system while the warm-up operation is being performed.

### BRIEF DESCRIPTION OF THE DRAWINGS

FIG. 1 is a side view of an electric tractor.
FIG. 2 is a block diagram showing an electric system and a motive power system of travel devices and a mower.

### DETAILED DESCRIPTION OF PREFERRED EMBODIMENTS

### Overview of article transport facility

Modes for carrying out the present invention will be described with reference to the drawings. An "F" arrow", a "B" arrow, an "L" arrow, and an "R" arrow in the figures respectively indicate forward, backward, leftward, and rightward directions in the following description, unless otherwise stated. A "U" arrow and a "D" arrow in the figures indicate upward and downward directions, respectively.

### Overall configuration of tractor

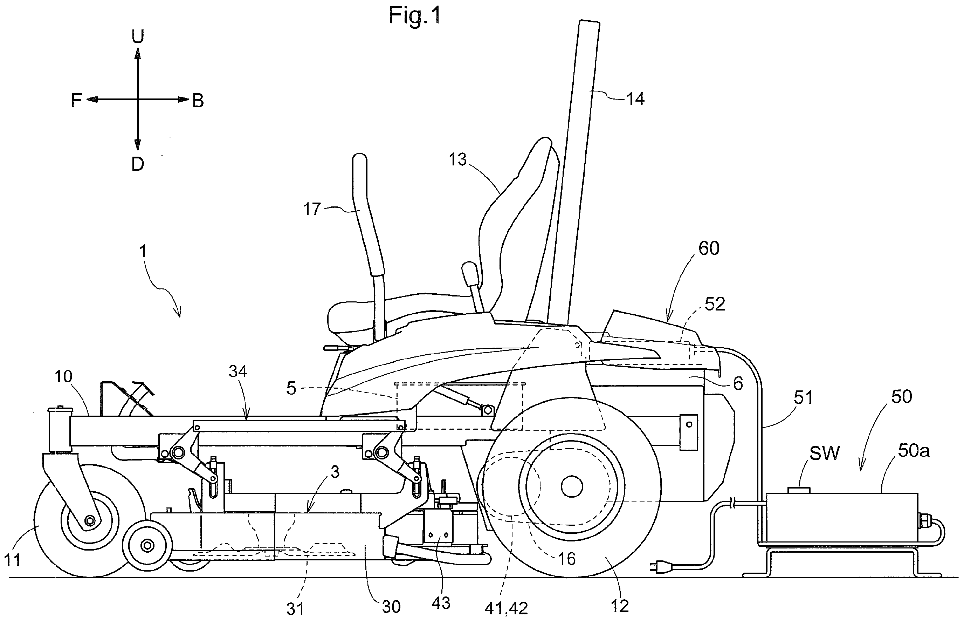

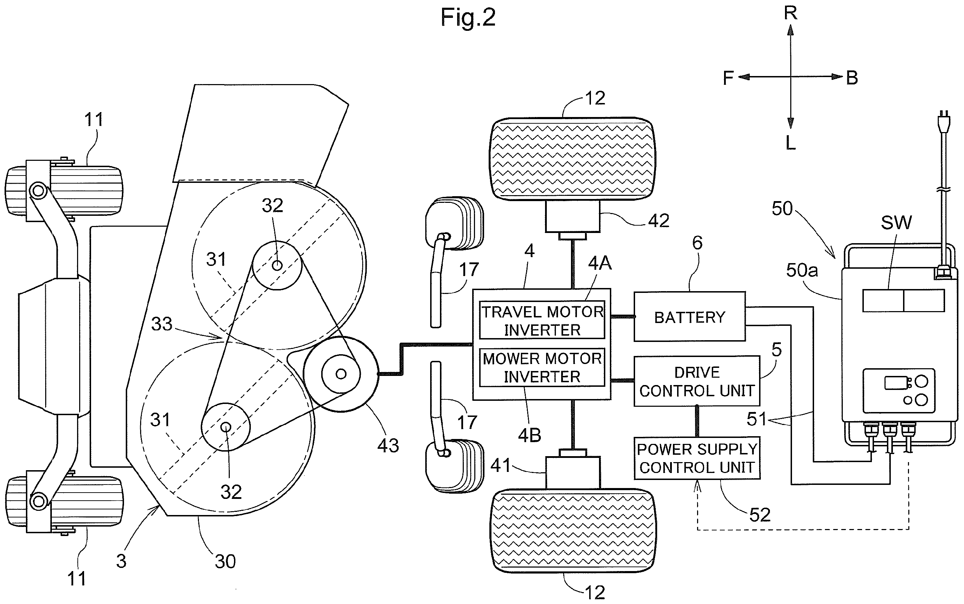

An electric mower, which is an electric work vehicle of this embodiment, will be described below. This electric mower includes a pair of left and right front wheels 11 supported by a front part of a vehicle body 1, a pair of left and right rear wheels 12 serving as a drive wheel unit and supported by a rear part of the vehicle body 1, and a mower unit 3 serving as a work device and supported on the underside of the vehicle 1 between the front wheels 11 and the rear wheels 12 and, as shown in FIGS. 1 and 2.

The vehicle body 1 includes an operator seat 13, a ROPS frame 14 ("Roll Over Protection Structure" frame), and so on. The vehicle body 1 includes a frame 10, which includes left and right longitudinal beams extending in the front-rear direction and a cross beam that couples these longitudinal beams. The ROPS frame 14 has a lower end coupled to the fame 10.

The front wheels 11 are caster wheels, and the rear wheels 12 are drive wheels. A left travel motor 41 and a right travel motor 42 for the rear wheels 12 that serve as motive power sources are located inward of the left and right rear wheels 12, respectively. The left travel motor 41 and the right travel motor 42 are electric motors, and motive power from the left travel motor 41 and the right travel motor 42 is transmitted to the rear wheels 12 through a reduction mechanism 16. Each rear wheel 12 is driven independently.

A battery 6, which supplies electric power to an electric motor for travel and a later-described mower motor 43, is provided between the left and right rear wheels 12 and housed in a battery storage section 60.

Gear shift levers 17 serving as manual speed operation tools are located on the left and right sides of the operator seat 13. The left and right rear wheels 12 are driven forward or backward, independently of each other, by operating the left and right gear shift levers 17, thus causing the vehicle 1 to travel forward or reverse or to turn left or right.

The mower unit 3 includes a mower deck 30 and mower blades 31 rotatably supported about a vertical axis inside the mower deck 30, as shown in FIG. 1. The mower blades 31 are driven to rotate by the mower motor 43, which is a motive power source. The mower deck 30 is suspended from the frame 10 such that the mower deck 30 can be raised and lowered by a link mechanism 34.

FIG. 2 shows a motive power system and a control system of the electric mower. The mower motor 43 serving as an electric motor for work is located on a rear wall of the mower deck 30. The mower motor 43 is an electric motor and rotates rotary shafts 32, to which the mower blades 31 are attached, via a belt transmission mechanism 33. The left travel motor 41 serving as an electric motor for travel is provided to rotate the left rear wheel 12, and the right travel motor 42 serving as an electric motor for travel is provided to rotate the right rear wheel 12.

An inverter 4 supplies electric power to the left travel motor 41, the right travel motor 42, and the mower motor 43. The inverter 4 includes a travel motor inverter 4A that supplies electric power to the left motor 41 and the right motor 42, and a mower motor inverter 4B that supplies electric power to the mower motor 43.

A drive control unit 5 is constituted by an electronic control unit (ECU) provided in the vehicle body 1, and controls the supply of electric power from the battery 6 to the inverter 4.

The inverter 4 is driven and controlled based on a control signal from the drive control unit 5. The inverter 4 is connected to the battery 6 serving as an electric power source. That is, electric power from the battery 6 drives the left travel motor 41 and the right travel motor 42, and the electric mover is caused to travel by the driving force generated by the motors. That is, electric power from the battery 6 drives the mower motor 43, and the mower unit 3 performs mowing work with use of the driving force generated by the mower motor 43.

### Configuration of charger

FIGS. 1 and 2 show a charger 50. The charger 50 has a rectangular-parallelepiped body 50a. The body 50a includes a harness 51, which is connected to the battery 6. The charger 50 charges the battery 6 via the harness 51 with electric power supplied from an external power source.

The charger 50 includes a switch SW (which corresponds to a "manual operation tool" of the present invention) for performing a mode switching operation to switch between a warm-up mode, in which the battery 6 is charged and performs a warm-up operation, and a charging mode, in which the battery 6 is charged without performing the warm-up operation.

In this embodiment, a power supply control unit 52 (which corresponds to a "control unit" of the present invention) is provided that is constituted by an ECU in the vehicle body 1 and controls processing to supply electric power to the battery 6 performed by the charger 50.

The power supply control unit 52 performs control to charge the battery 6 and cause the battery 6 to perform the warm-up operation in response to the switch SW being operated to switch to the warm-up mode. Various methods of the warm-up operation of the battery 6 are possible, and may be, for example, a method in which the battery 6 is forced forcibly charged and discharged to generate internal heat, or may be a method in which the power supply control unit 52 controls the drive control unit 5 and drives the left travel motor 41, the right travel motor 42, and the mower motor 43 with electric power from the battery 6 to generate internal heat in the battery 6.

Electric power supply involving the warm-up operation may be supplied from the battery 6 that is being charged or directly from an external power source via the harness 51.

The power supply control unit 52 charges the battery 6 by performing control to supply power to the battery 6 without causing the battery 6 to perform the warm-up operation in response to the switch SW being operated to switch to the charging mode.

### Other Embodiments

Other embodiments obtained by modifying the above embodiment are illustrated below.
(1) A configuration in which the charger 50 includes a switch SW has been described as an example in the above embodiment, but the present invention is not limited to the embodiment. An alternative configuration may be employed in which the charger 50 includes a wireless communication unit capable of wireless communication with a communication terminal and the power supply control unit 52 is controlled in accordance with operation information from the communication terminal. In this case, the communication terminal may include a display unit that displays the status of control performed by the power supply control unit 52.
(2) A configuration in which the mode switching operation to switch between the warm-up mode and the charging mode is performed by operating the switch SW has been described as an example in the above embodiment, but the present invention is not limited to the embodiment. For example, an alternative configuration may be employed in which the power supply control unit 52 includes a timer unit that turns off the warm-up operation and switches from the warm-up operation to the charging mode in response to a set time having elapsed, or that turns on the warm-up operation and switches from the charging mode to the warm-up mode in response to a set time having elapsed. In this case, the body 50a may include a timer setting operation unit that enables a time to perform switching control and a control to turn on and off the warm-up operation to be set.
(3) A configuration in which the left travel motor 41 and the right travel motor 42 for the rear wheels 12 as well as the mower motor 43 are provided as motive power sources has been described as an example in the above embodiment, but the present invention is not limited to the embodiment. For example, a hydraulic device may be provided as a motive power source. In this case, the drive control unit 5 is configured to control the inverter 4 and drive the hydraulic device based on an input signal from the manual speed operation tool and the power supply control unit 52 of the charger 50. That is, the power supply control unit 52 controls the hydraulic device and causes the hydraulic device to perform the warm-up operation via the drive control unit 5. This configuration enables the hydraulic device as well as the battery 6 to perform the warm-up operation.
(4) A configuration in which the power supply control unit 52 is constituted by an ECU in the vehicle body 1 has been described as an example in the above embodiment, but the present invention is not limited to the above embodiment. For example, the power supply control unit 52 may be included in the charger 50.

Note that the configuration disclosed in the above embodiment (including other embodiments; the same applies to the following) can be applied in combination with configurations disclosed in the other embodiments as long as no contradiction arises. The embodiment disclosed herein is an example, and embodiments of the present invention are not limited thereto. The present invention can be changed as appropriate without departing from the object of the present invention.

### Industrial Applicability

The present invention is applicable to an electric work vehicle that includes a battery chargeable with use of an external power source.

### Description of Reference Signs

- 6: Battery
- 41: Left travel motor (electric motor)
- 42: Right travel motor (electric motor)
- 43: Mower motor (electric motor)
- 50: Charger
- 52: Power supply control unit (control unit)

## Claims

1. An electric work vehicle (1) configured to travel and perform work with use of driving force output from a motive power source (41, 42, 43), the electric work vehicle (1) comprising:
a battery (6) configured to supply electric power to the motive power source (41, 42, 43);
a charger (50) configured to charge the battery (6) with electric power supplied from an external power source; and
a control unit (52) configured to control processing for supplying electric power to the battery (6) performed by the charger (50),
wherein the control unit (52) is configured to switch between a warm-up mode of charging the battery (6) and causing the battery to perform a warm-up operation and a charging mode of charging the battery (6) without causing the battery to perform the warm-up operation.

2. The electric work vehicle (1) according to claim 1, further comprising:
a manual operation tool (SW) configured to enable a mode switching operation to be manually performed on the control unit (52).

3. The electric work vehicle (1) according to claim 1,
wherein the control unit (52) includes a wireless communication unit configured to perform wireless communication with a communication terminal, and
the control unit (52) is controlled in accordance with operation information from the communication terminal.

4. The electric work vehicle (1) according to claim 3,
wherein the communication terminal includes a display unit configured to display a status of control performed by the control unit (52).

5. The electric work vehicle (1) according to any one of claims 1 to 4,
wherein the control unit (52) includes a timer unit configured to turn on and off the warm-up operation in response to a predetermined time having elapsed.

6. The electric work vehicle (1) according to any one of claims 1 to 5, wherein the motive power source (41, 42, 43) is an electric motor.

7. The electric work vehicle (1) according to any one of claims 1 to 5, wherein the motive power source (41, 42, 43) is a hydraulic device.
